(19) Europäisches Patentamt

European Patent Office

Office européen des brevets

(11) **EP 0 843 447 A1**

## (12) DEMANDE DE BREVET EUROPEEN

(43) Date de publication:
**20.05.1998 Bulletin 1998/21**

(51) Int. Cl.⁶: $H04L\ 27/10$

(21) Numéro de dépôt: **97203523.2**

(22) Date de dépôt: **12.11.1997**

(84) Etats contractants désignés:
**AT BE CH DE DK ES FI FR GB GR IE IT LI LU MC NL PT SE**

(30) Priorité: **19.11.1996 FR 9614091**

(71) Demandeur:
**Philips Electronics N.V.
5621 BA Eindhoven (NL)**

(72) Inventeur:
**Kientz, Alfred,c/o Société Civile S.P.I.D.
75008 Paris (FR)**

(74) Mandataire: **Caron, Jean
Société Civile S.P.I.D.
156, Boulevard Haussmann
75008 Paris (FR)**

(54) **Procédé de transmission d'un signal asynchrone NRZ en modulation de fréquence**

(57)    A une valeur logique donnée est associée une déviation de fréquence tantôt positive et tantôt négative. La déviation est positive pendant un certain temps et ensuite négative, les durées respectives étant déterminées de telle façon que la somme cumulée des durées de déviation positive et de déviation négative soient pratiquement égales.

Un dispositif à cet effet comporte un élément analyseur du signal asynchrone NRZ, avec un intégrateur analogique (1, 2) pour la mesure du temps, qui actionne un commutateur (3) pour la sélection d'une tension de commande (MOD) parmi trois. Cet élément analyseur comporte une bascule D (2), à l'entrée d'horloge (CP) de laquelle est amené le signal asynchrone NRZ, avec une rétro-action à résistance-capacité (4, 1) entre sa sortie $Q$ et son entrée D, et avec des moyens (3) pour relier la sortie $\overline{Q}$ de la bascule (2) à son entrée D lorsque le signal NRZ est à un niveau logique déterminé.

Applications : MODEMs à faible coût.

FIG. 3

**Description**

La présente invention concerne un procédé de transmission d'un signal asynchrone NRZ en modulation de fréquence, associant à une valeur logique donnée une fréquence d'émission dite centrale et à la valeur logique inverse une déviation de fréquence tantôt positive et tantôt négative par rapport à la fréquence centrale.

Elle concerne en outre un dispositif émetteur pour l'émission de données asynchrones NRZ en modulation de fréquence et un dispositif récepteur pour de telles données.

On entend par "asynchrone" le fait que le signal peut passer d'un état logique à l'autre à tout moment, indépendamment de toute horloge.

Une difficulté se présente, lorsque l'on désire transmettre un signal NRZ asynchrone en modulation de fréquence, à cause d'une composante continue due au fait que le signal comporte un nombre inégal de bits dans chacun des états logiques. Supposons par exemple que l'on utilise un oscillateur à haute fréquence, directement modulé par un signal à deux niveaux, pour lequel la fréquence est plus souvent déviée qu'au repos : l'oscillateur dérive, sous l'effet de sa boucle de rétro-action, de telle façon que la fréquence déviée se rapproche de la fréquence nominale. Une solution partielle est apportée par un signal qui, pour une valeur logique donnée, est tantôt positif et tantôt négatif. Un tel signal est connu de l'homme du métier : par exemple la publication "Techniques de l'ingénieur, Electronique", chapitre E7100 page 4, montre un signal dit bipolaire, dont les bits à "un" sont alternativement positifs et négatifs. Le problème n'est pourtant pas complètement résolu en utilisant un tel signal, car il peut encore subsister un déséquilibre, et en outre, avec un signal asynchrone, l'absence d'horloge liée au signal ne permet pas de compter ses bits pour gérer l'alternance de bits positifs et négatifs. On pourrait résoudre ce problème par exemple en travaillant à fréquence basse avec un oscillateur sans rétro-action, puis en transposant la fréquence produite vers des valeurs plus élevées, ce qui nécessiterait un dispositif relativement complexe.

Un objet de l'invention est de résoudre ce problème de façon simple.

A cet effet, la déviation a une valeur positive pendant une première durée puis une valeur négative pendant une seconde durée, ces durées étant déterminées, de manière analogique, de telle façon que la somme cumulée des premières durées et la somme cumulée des secondes durées, au cours du temps, soient pratiquement égales.

L'invention est donc basée sur l'idée de répartir "équitablement" les modulations positive et négative, sur la base de mesures de temps.

De préférence, une durée pendant laquelle la fréquence est la fréquence centrale est toujours intercalée entre une durée avec déviation de fréquence positive et une durée avec déviation de fréquence négative.

Ainsi, on évite le risque de provoquer un artefact : sans cette disposition, le signal passant obligatoirement par la fréquence centrale au cours d'un changement de signe de la déviation de fréquence, cela pourrait entraîner, à la réception, pendant un court instant, la création d'un "faux" bit correspondant à cette fréquence centrale.

Avantageusement, la modulation de fréquence étant réalisée au moyen d'un oscillateur avec une boucle à verrouillage de phase, la constante de temps de cette boucle est supérieure aux dites durées.

Ainsi, le verrouillage de phase de l'oscillateur ne risque pas de contrarier à l'excès la déviation de fréquence.

Un dispositif émetteur selon l'invention, comprenant un générateur de tension de commande de fréquence qui fournit trois valeurs de tension de commande, appelés basse, moyenne, haute, associant à une valeur logique donnée la tension moyenne, et à la valeur logique inverse tantôt la tension haute et tantôt la tension basse, comprend en outre des moyens pour fournir la tension haute pendant une première durée et la tension basse pendant une seconde durée, de telle façon que la somme cumulée des premières durées et la somme cumulée des secondes durées, au cours du temps, soient pratiquement égales.

A cet effet, il comporte un élément analyseur du signal asynchrone NRZ entrant, qui comprend un intégrateur analogique pour la mesure du temps, et qui actionne un commutateur pour la sélection d'une des trois valeurs de tension de commande.

Dans une forme de réalisation avantageuse, l'élément analyseur comporte une bascule D à l'entrée d'horloge de laquelle est amené le signal asynchrone NRZ, un réseau de rétro-action à résistance-capacité entre la sortie $Q$ et l'entrée D de la bascule, et des moyens pour relier sa sortie $\overline{Q}$ à son entrée D seulement lorsque le signal NRZ est à un niveau logique déterminé.

Un dispositif récepteur selon l'invention comprend, pour le traitement d'un signal démodulé, un comparateur dont la tension de seuil est réglée pour qu'il soit activé par un signal négatif, un autre comparateur dont la tension de seuil est réglée pour qu'il soit activé par un signal positif, et un circuit logique relié aux sorties des comparateurs, dont la sortie, destinée à fournir le signal NRZ reconstitué, est activée quand l'un ou l'autre des comparateurs est activé.

Avantageusement, ce dispositif comprend en outre un filtre passe-bas ou intégrateur analogique du signal démodulé, pour fournir une tension dite moyenne représentant la valeur moyenne de ce signal, un circuit de décalage pour produire sur sa sortie une tension décalée par rapport cette tension moyenne, laquelle sortie est reliée à l'un des comparateurs pour lui fournir sa tension de seuil, dite première tension de seuil.

Ceci permet de compenser les éventuelles dérives en courant continu du signal démodulé.

Le dispositif comprend en outre un circuit créateur de tension symétrique, pour fournir en sortie une tension pratiquement symétrique de la première tension de seuil par rapport à la tension moyenne, laquelle sortie est reliée à l'autre comparateur pour lui fournir sa tension de seuil.

Ces aspects de l'invention ainsi que d'autres aspects plus détaillés apparaîtront plus clairement grâce à la description suivante d'un mode de réalisation constituant un exemple non limitatif.

La figure 1 est un schéma d'un émetteur de signal numérique NRZ avec un modulateur de fréquence.

La figure 2 représente un montage qui engendre un signal de commande de fréquence pour le modulateur de l'émetteur de la figure 1.

La figure 3 est un diagramme de temps montrant des signaux rencontrés dans le montage de la figure 2.

La figure 4 représente un circuit d'un récepteur, qui fournit un signal NRZ reconstitué à partir d'un signal issu d'un démodulateur de fréquence.

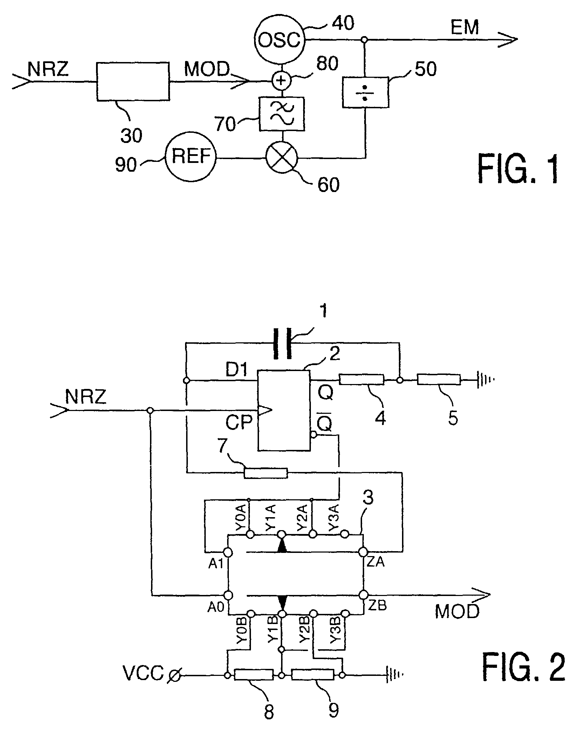

Dans l'émetteur de signal numérique NRZ de la figure 1, un oscillateur principal 40 délivre un signal EM modulé en fréquence qui constitue le signal de sortie de l'émetteur. Ce signal est amené à l'entrée d'un diviseur de fréquence 50 qui délivre un signal, dont la fréquence est divisée, à une entrée d'un comparateur de phase 60 à deux entrées. Un oscillateur de référence 90, par exemple à quartz, fournit à l'autre entrée du comparateur 60 un signal de référence de fréquence. Le signal d'erreur du comparateur est amené l'oscillateur principal 40 pour en régler la fréquence, via un filtre passe-bas 70. Tout ceci constitue un oscillateur à boucle de verrouillage de phase, connu en soi, et ne nécessite donc pas d'être décrit plus en détail.

Un signal NRZ est amené à l'entrée d'un module 30 générateur de tension de commande de fréquence, qui délivre en sortie un signal MOD de commande de fréquence pour la modulation de l'oscillateur. Ce signal est ajouté dans un élément 80 au signal d'erreur issu du comparateur 60, pour moduler en fréquence l'oscillateur 40.

On désire par exemple que le procédé de transmission du signal asynchrone NRZ associe à un bit de valeur logique "un" une fréquence d'émission centrale ou de repos, et à un bit de valeur logique "zéro" une déviation de fréquence tantôt positive et tantôt négative. Il est clair que l'on pourrait aussi bien choisir l'inverse. Le module 30 fournit trois valeurs de tension de commande, appelés basse, médiane, haute, associant à un bit "un" la valeur médiane, et à un bit "zéro" tantôt la valeur haute et tantôt la valeur basse. La valeur haute est fournie pendant une première durée et la valeur basse pendant une seconde durée, ces durées étant déterminées de telle façon que la somme cumulée des premières durées et la somme cumulée des secondes durées, au cours du temps, soient pratiquement égales. La fréquence de coupure du filtre passe-bas 70 est choisie de façon que la constante de temps de la boucle à verrouillage de phase soit supérieure à ces durées.

Le module 30 comporte un élément analyseur du signal asynchrone NRZ d'entrée, basé sur une intégration analogique pour la mesure du temps. Cet élément actionne un commutateur pour la sélection de l'une des trois tensions de commande. Différentes manières de réaliser l'élément analyseur s'offrent à l'homme du métier, par exemple un compteur de temps peut être utilisé, actionné lorsque le signal NRZ est à "zéro", et remis à zéro pour un chiffre de comptage déterminé, en délivrant à ce moment un signal de changement de signe. Parmi les moyens possibles on peut aussi mentionner : un processeur programmé pour compter des impulsions d'une horloge, ou un ensemble câblé avec des portes ouvertes tour à tour.

Néanmoins une réalisation de type analogique est préférée. Dans le mode de réalisation particulier décrit ici en référence à la figure 2, l'analyseur comporte une bascule 2 de type D. Le signal asynchrone NRZ est amené à l'entrée dite d'horloge CP de cette bascule, qui est munie d'un réseau de rétro-action, constitué d'une résistance 4 et d'une capacité 1, connectées en série, entre sa sortie $Q$ et son entrée D1. Une résistance 5, de valeur plus faible que celle de la résistance 4, est connectée entre le point commun de la résistance 4 et de la capacité 1, et la masse. La sortie $\overline{Q}$ de la bascule D est reliée à son entrée D1 lorsque le signal NRZ est à un niveau logique déterminé. Ceci est obtenu au moyen d'un multiplexeur 3, qui possède une entrée de commande à deux bornes A0, A1, pour deux bits. Un commutateur à quatre positions est actionné, reliant une borne ZA à l'une des quatre bornes Y0A, Y1A, Y2A, Y3A, en fonction des quatre valeurs possibles d'un mot appliqué à l'entrée A0, A1. La sortie $\overline{Q}$ est reliée aux bornes Y0A et Y2A, et l'entrée D1 de la bascule 2 est reliée à la borne ZA par une résistance 7. Les bornes Y1A et Y3A sont laissées en l'air. La sortie $\overline{Q}$ est reliée à la borne A1 et le signal d'entrée NRZ est amené à la borne A0. Le multiplexeur 3 est par exemple de la série logique dite CMOS, modèle 4052. Lorsque la borne A0 (c'est-à-dire le signal NRZ) est à zéro, la sortie D1 est reliée, via la borne ZA, soit à Y0A, soit à Y2A (selon la valeur appliquée à la borne d'entrée A1), c'est-à-dire à la sortie $\overline{Q}$ de la bascule D.

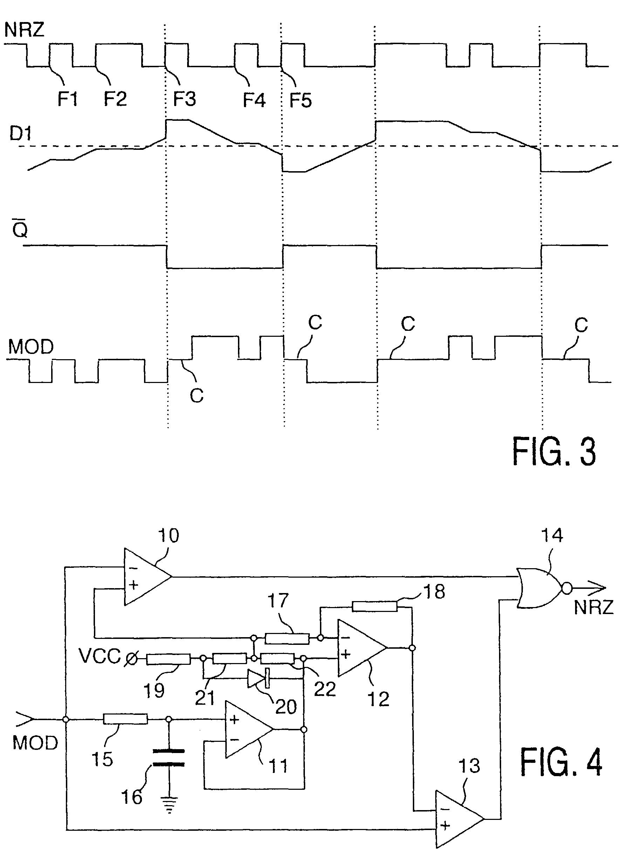

Sur la figure 3, la ligne NRZ représente un exemple de signal NRZ à coder. La ligne D1 représente la tension correspondante à l'entrée D1 de la bascule D. La ligne $\overline{Q}$ représente le signal à la sortie $\overline{Q}$ de la bascule. La ligne MOD représente la tension de commande de fréquence résultante. Pour simplifier, on suppose que la tension de seuil à appliquer en D1 pour faire basculer la bascule est la même dans les deux sens ; cette tension est représentée par une ligne horizontale en tirets. Supposons qu'au départ la tension est basse en D1, et la tension haute en $\overline{Q}$. La tension en $\overline{Q}$ est appliquée à D1, mais seulement quand NRZ est bas, via Y0A ou Y2A et la résistance 7 : la tension monte en D1 pendant toutes les périodes où NRZ est bas, en déchargeant la capacité 1. Lors de l'arrivée des fronts montants F1 et F2 de NRZ, appliqués à l'entrée CP, la tension D1 est encore en dessous de la tension de seuil, rien ne se passe. Lors de l'arrivée du front montant F3, la tension en D1 a monté jusqu'au dessus du seuil, la sortie $Q$ passe à l'état haut, et la sortie $\overline{Q}$ à l'état bas. Pendant les périodes où NRZ est bas, la résistance 7 est reliée à la sortie $\overline{Q}$ qui est maintenant basse, et la tension en D1 descend. Lors de l'arrivée du front montant F4 la tension D1 est encore au dessus de la tension de seuil, rien ne se passe. Lors de l'arrivée du front montant F5, la tension en D1 a descendu au dessous du seuil, la sortie $Q$ passe à l'état bas, et la sortie $\overline{Q}$ à l'état haut, et ainsi de suite. Ce montage constitue une espèce de multivibrateur très particulier, qui bascule lorsque le signal NRZ présente un front montant, à condition que la tension en D1, contrôlée par la capacité 1, ait suffisamment varié depuis le dernier basculement, c'est-à-dire au bout d'un certain délai. Pour que le basculement se produise, il faut un front montant du signal NRZ, c'est-à-dire un passage à l'état logique haut correspondant à la tension médiane. Ainsi une durée pendant laquelle la fréquence est la fréquence centrale est toujours intercalée entre une durée avec déviation de fréquence positive et une durée avec déviation de fréquence négative. De telles durées sont indiquées par la référence C sur la ligne MOD.

Le multiplexeur modèle 4052 possède en outre un deuxième commutateur, reliant une borne ZB à l'une des bornes Y0B, Y1B, Y2B, Y3B, sous la commande des mêmes entrées A0, A1. Ceci permet de délivrer le signal de commande MOD : au moyen d'un pont diviseur à résistances 8, 9 placé entre une tension de référence VCC et la masse, sont créées trois tensions haute, médiane, et basse. La tension médiane est appliquée ensemble aux bornes Y1B ET Y3B. La tension basse est appliquée à la borne Y3B. La tension haute est appliquée à la borne Y0B. Le signal de commande MOD est disponible sur la borne ZB. Pour le commutateur A, l'entrée A1 aurait pu aussi bien être connectée à une tension fixe, mais la connexion de $\overline{Q}$ à A1 est nécessaire pour le commutateur B.

Dans un récepteur, le signal haute-fréquence reçu est démodulé dans un démodulateur de fréquence non représenté, qui ne fait pas partie de l'invention. Un signal démodulé, qui reproduit le signal de commande de modulation mentionné plus haut (c'est pourquoi il est encore appelé MOD), est amené à l'entrée MOD du dispositif de la figure 4, qui comprend deux comparateurs d'entrée 10 et 13. La tension de seuil du comparateur 10, appliquée à son entrée "+", est réglée pour qu'il soit activé, c'est-à-dire ici délivre un signal haut, lorsque son entrée inverseuse reçoit un signal négatif plus bas que le seuil, correspondant par exemple à une déviation de fréquence négative. La tension de seuil du second comparateur 13, appliquée à son entrée "-", est réglée pour qu'il réagisse, c'est-à-dire ici délivre un signal haut, lorsque son entrée "+" reçoit un signal positif plus haut que le seuil, correspondant par exemple à une déviation de fréquence positive.

Un circuit logique 14, ici une porte NON-OU, a ses entrées reliées aux sorties des comparateurs 10 et 11 et fournit en sortie le signal NRZ reconstitué. Sa sortie est à zéro quand le premier comparateur d'entrée reçoit un signal négatif ou bien quand le second comparateur d'entrée reçoit un signal positif, c'est-à-dire pour une valeur logique "zéro". On pourrait imaginer des comparateurs d'entrée qui délivrent un signal bas lorsqu'il sont activés, auquel cas le circuit 14 serait une porte ET.

Un filtre passe-bas ou intégrateur analogique du signal démodulé, constitué par la résistance 15 et la capacité 16, fournit une tension, dite moyenne, représentant la valeur moyenne du signal MOD. Cette tension est reprise par un amplificateur opérationnel 11 monté en suiveur à gain unité, puis elle est décalée par un circuit de décalage. Ce dernier est constitué par un pont diviseur, comprenant une résistance 19 en série avec une diode 20, entre une tension de référence VCC et la sortie de l'amplificateur 11. La diode 20 impose une tension pratiquement constante entre ses bornes, et des résistances 21 et 22 forment un diviseur qui en prélève une partie. La tension au point commun des résistances 21 et 22 est donc décalée d'une valeur constante par rapport à la tension de sortie de l'amplificateur 11. Elle est appliquée à l'entrée "+" du comparateur 10, constituant une première tension de seuil.

Un amplificateur opérationnel 12 est appelé créateur de tension symétrique. Il est monté de façon connue en amplificateur à gain fixe, au moyen d'une résistance 17 reliée d'un côté à la susdite tension décalée et de l'autre à l'entrée "-" de l'amplificateur, et d'une résistance 18 reliée d'un côté à la sortie de l'amplificateur 12 et de l'autre à son entrée "-". L'entrée "+" est reliée à la susdite tension moyenne. Il produit donc en sortie une tension pratiquement symétrique de la première tension de seuil par rapport à la tension moyenne. Cette sortie est reliée à l'entrée "-" du comparateur 13, constituant une seconde tension de seuil. Les quatre comparateurs ou amplificateurs 10 à 13 sont avantageusement réalisés à partir d'un même boîtier à quatre amplificateurs.

**Revendications**

1. Procédé de transmission d'un signal asynchrone NRZ en modulation de fréquence, associant à une valeur logique donnée une fréquence d'émission dite centrale et à la valeur logique inverse une déviation de fréquence tantôt positive et tantôt négative par rapport à la fréquence centrale, caractérisé en ce que la déviation a une valeur positive pendant une première durée, puis une valeur négative pendant une seconde durée, ces durées étant déterminées, de manière analogique, de telle façon que la somme cumulée des premières durées et la somme cumulée des secondes durées, au cours du temps, soient pratiquement égales.

2. Procédé selon la revendication 1, caractérisé en ce qu'une durée pendant laquelle la fréquence est la fréquence centrale est toujours intercalée entre une durée avec déviation de fréquence positive et une durée avec déviation de fréquence négative.

3. Procédé selon l'une des revendications 1 ou 2, caractérisé en ce que, la modulation de fréquence étant réalisée au moyen d'un oscillateur avec une boucle à verrouillage de phase, la constante de temps de cette boucle est supérieure aux dites durées.

4. Dispositif émetteur pour la transmission de données asynchrones NRZ en modulation de fréquence, comprenant un générateur de tension de commande de fréquence qui fournit trois valeurs de tension de commande, appelés basse, médiane, haute, associant à une valeur logique donnée la valeur médiane, et à la valeur logique inverse tantôt la valeur haute et tantôt la valeur basse, caractérisé en ce qu'il comprend des moyens pour fournir la valeur haute pendant une première durée et la valeur basse pendant une seconde durée, de telle façon que la somme cumulée des premières durées et la somme cumulée des secondes durées, au cours du temps, soient pratiquement égales.

5. Dispositif émetteur selon la revendication 4, caractérisé en ce qu'il comporte un élément analyseur du signal asynchrone NRZ, qui comprend un intégrateur analogique pour la mesure du temps, et qui actionne un commutateur pour la sélection d'une des trois valeurs de tension de commande.

6. Dispositif émetteur selon la revendication 5, caractérisé en ce que l'élément analyseur comporte une bascule D à l'entrée d'horloge de laquelle est amené le signal asynchrone NRZ, un réseau de rétro-action à résistance-capacité entre la sortie $Q$ et l'entrée D de la bascule, et des moyens pour relier la sortie $\overline{Q}$ de la bascule D à son entrée D seulement lorsque le signal NRZ est à un niveau logique déterminé.

7. Dispositif récepteur pour la réception d'un signal émis selon le procédé de l'une des revendications 1 à 3, caractérisé en ce que, pour le traitement d'un signal démodulé, il comprend un comparateur dont la tension de seuil est réglée pour qu'il soit activé par un signal négatif, un autre comparateur dont la tension de seuil est réglée pour qu'il soit activé par un signal positif, et un circuit logique relié aux sorties des comparateurs, dont la sortie, destinée à fournir le signal NRZ reconstitué, est activée quand l'un ou l'autre des comparateurs est activé.

8. Dispositif récepteur selon la revendication 7, caractérisé en ce qu'il comprend un filtre passe-bas ou intégrateur analogique du signal démodulé, pour fournir une tension dite moyenne représentant la valeur moyenne de ce signal, et un circuit de décalage pour produire sur sa sortie une tension décalée par rapport cette tension moyenne, laquelle sortie est reliée à l'un des comparateurs pour lui fournir sa tension de seuil, dite première tension de seuil.

9. Dispositif récepteur selon la revendication 8, caractérisé en ce qu'il comprend un circuit créateur de tension symétrique, pour fournir en sortie une tension pratiquement symétrique de la première tension de seuil par rapport à la tension moyenne, laquelle sortie est reliée à l'autre comparateur pour lui fournir sa tension de seuil.

FIG. 1

FIG. 2

FIG. 3

FIG. 4

Office européen
des brevets

# RAPPORT DE RECHERCHE EUROPEENNE

Numéro de la demande

EP 97 20 3523

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| A | DE 28 52 374 B (SIEMENS) 24 janvier 1980<br>* figure 4 *<br>* colonne 3, ligne 48 - ligne 53 *<br>* colonne 4, ligne 42 - ligne 56 *<br>--- | 1,4,7 | H04L27/10 |
| A | FR 2 476 946 A (THOMSON) 28 août 1981<br>* page 2, ligne 23 - ligne 29 *<br>----- | 1,4 | |

**DOMAINES TECHNIQUES RECHERCHES (Int.Cl.6)**

H04L

Le présent rapport a été établi pour toutes les revendications

| Lieu de la recherche | Date d'achèvement de la recherche | Examinateur |
|---|---|---|
| LA HAYE | 19 février 1998 | Scriven, P |

CATEGORIE DES DOCUMENTS CITES

X : particulièrement pertinent à lui seul
Y : particulièrement pertinent en combinaison avec un
    autre document de la même catégorie
A : arrière-plan technologique
O : divulgation non-écrite
P : document intercalaire

T : théorie ou principe à la base de l'invention
E : document de brevet antérieur, mais publié à la
    date de dépôt ou après cette date
D : cité dans la demande
L : cité pour d'autres raisons
........................................................
& : membre de la même famille, document correspondant

EPO FORM 1503 03.82 (P04C02)